(19) **Europäisches Patentamt / European Patent Office / Office européen des brevets**

(11) **EP 4 691 221 A1**

(12) **EUROPEAN PATENT APPLICATION**

(43) Date of publication:
**11.02.2026  Bulletin 2026/07**

(21) Application number: **25180058.7**

(22) Date of filing: **02.06.2025**

(51) International Patent Classification (IPC):
**A01F 15/12** (2006.01)   **A01F 15/14** (2006.01)

(52) Cooperative Patent Classification (CPC):
**A01F 15/141; A01F 15/12**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority:  **05.08.2024  US 202418794238**

(71) Applicant: **Deere & Company**
**Moline, IL 61265 (US)**

(72) Inventors:
• **Raste, Hrishikesh**
  **Mannheim (DE)**
• **Coffman, Bart A.**
  **Mannheim (DE)**
• **Bhunya, Ajit Kumar**
  **Mannheim (DE)**

(74) Representative: **Stein, Stefan**
**John Deere GmbH & Co. KG**
**Global Intellectual Property Services**
**John-Deere-Straße 70**
**68163 Mannheim (DE)**

(54) **METHODS AND SYSTEMS FOR APPLYING TWINE TO A ROUND BALE**

(57) A baler has a dispensing arm movably mounted to a frame and configured to dispense twine to wrap a bale of crops. The bale has a first end, a second end, a center, and a rotation axis extending along a longitudinal axis of the bale. The twine arm is moveable between a stowed position, a first position near the first end of the bale, and a second position near the second end of the bale. A controller is operatively coupled to the dispensing arm to control movement of the dispensing arm between the first end, a first and second catch position, and the second end. The controller is programmed to move the dispensing arm with a fast stroke at portions of the bale and a slower apply stroke a different portions of the bale to wrap the bale with twine having consistent spacing along the longitudinal axis of the bale.

FIG. 1

## Description

### BACKGROUND

An agricultural baler is a specialized machine used in farming operations to efficiently collect and package crops such as hay, straw, or silage into compact bales for storage, transportation, and feeding livestock. The agricultural baler is self-propelled or towed behind a vehicle and driven through the field. It picks up windrowed crop and feeds it into a baling chamber. Inside the baling chamber, the crop is compressed using either a belt and rollers or a series of hydraulic rams. This compression squeezes out excess air and reduces the volume of the crop, forming it into a dense bale. Once the bale reaches the desired size and density, in a binding phase the baler applies twine, wire, netting, or plastic around the bale to hold it together securely. The finished bale may be ejected from the baler and dropped onto the ground, ready for collection. In some models, the bale is automatically ejected, while in others, it may require manual handling. Agricultural balers can come in various types, including round balers, which produce cylindrical bales, and square balers, which produce rectangular bales. The choice of baler depends on factors such as the type of crop being baled, the desired bale size, and the preferences of the farmer.

In the binding phase, an arm is moved relative to the compressed bale to apply binding material to the bale to secure it. Some balers may include multiple arms to apply the binding material. The binding material, for instance twine, can be wrapped around round bales by spiraling the twine around it by moving the arm and rotating the compressed bale at the time same. In some instances, the binding material may be applied with inconsistent spacing because of the speed of the arm and controls issues. Inconsistent spacing of the binding material, for instance twine, can effect bale shape and may result in crops falling out of the bale. Therefore, misapplication of the binding material can result in crop loss or a misshapen bale that can affect stacking, storage, or transportation of the bale.

### SUMMARY

This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.

One or more techniques and systems are described herein for a baler comprising a dispensing arm with a mounting end movably mounted to a frame of the baler and a dispensing end opposite the mounting end. The dispensing end may be configured to dispense binding material to wrap a bale of crops. Each bale may have a first end, a second end opposite the first end, a center between the first end and the second end, and a rotation axis extending along a longitudinal axis of the bale. The dispensing arm may be moveable between a stowed position, a first position near the first end of the bale, and a second position near the second end of the bale. The baler also comprises a controller operatively connected with the dispensing arm. The controller may be adapted or configured to control movement of the dispensing arm to move to the first position, move to a first catch position near the center of the bale with a fast stroke and wrap the binding material onto the bale between the first end and the first catch position, resulting in the binding material having a wide spacing on the bale, move to the second end with an apply stroke and wrap the binding material onto the bale between the first catch position and the second end, resulting in the binding material having a narrow spacing on the bale, and wrap the binding material onto the second end with the dispensing arm in the second position. The controller may be further adapted or configured to control the movement of the dispensing arm to move to a second catch position near the center of the bale with another fast stroke and wrap the binding material onto the bale between the second end and the second catch position, resulting in the binding material having the wide spacing, move to the first end with another apply stroke and wrap the binding material onto the bale between the second catch position and the first end, resulting in the binding material having the narrow spacing on the bale, and wrap the binding material onto the first end with the dispensing arm in the first position.

In another implementation, the controller may be operable to move the dispensing arm faster during a fast stroke than during a during an apply stroke.

In another implementation, the first catch position and the second catch position may be at the same position along the longitudinal axis of the bale.

In another implementation, the baler may further comprise an actuator configured to cause movement of the dispensing arm.

In another implementation, the actuator may comprise an actuator brake.

In another implementation, the baler may further comprise a gear train having an input configured to couple to the actuator and output configured to couple to the mounting end of the dispensing arm.

In another implementation, the dispensing arm may be rotatably mounted to the frame of the baler by the gear train.

In another implementation, the baler may further comprise a linkage with a first end configured to couple to the actuator and a second end configured to couple to the input of the gear train.

In another implementation, the controller may be further adapted or configured to move the dispensing arm from the first position to the second position with a fast stroke before moving the dispensing arm to the first catch position.

In another implementation, the baler may be a round baler that produces cylindrical bales.

In another implementation, the binding material may be one or more of: twine, wire, netting, and/or plastic.

In another implementation, a baler may comprise a dispensing arm with a mounting end movably mounted to a frame of the baler and a dispensing end opposite the mounting end. The dispensing end may be configured to dispense binding material to wrap a bale of crops. The bale of crops may have a first end, a second end opposite the first end, a center between the first end and the second end, and a rotation axis extending along a longitudinal axis of the bale. The dispensing arm may be moveable between a stowed position, a first position near the first end of the bale, and a second position near the second position of the bale. The baler may further comprise a controller comprising a non-transient memory device storing logic and a processor operatively coupled with the non-transient memory device. The processor may be operable to execute the logic to: determine a first calculated speed, the first calculated speed being a speed of the dispensing arm; determine a second calculated speed, the second calculated speed being a rotational speed of the bale; move the dispensing arm to the first position; dispense binding material around the first end with the dispensing arm in the first position; move the dispensing arm at the first calculated speed from the first position to the second position while increasing the rotational speed of the bale to the second calculated speed; dispense binding material around the second end with the dispensing arm in the second position.

In another implementation, the logic may comprise a proportional integral derivative (PID) logic, and the processor is operable to execute the PID logic to compare a measured value of the rotational speed of the bale to the second calculated speed and to compare a measured valve of the speed of the dispensing arm to the first calculated speed, and the controller adjusts the rotational speed of the bale or the speed of the dispensing arm to correct for deviations between the measured values and the calculated values.

In another implementation, the processor may be adapted or configured to execute the logic to control the rotational speed of the bale by commanding a power take-off speed control to increase or decrease a rotational speed of the bale.

In another implementation, the processor may be adapted or configured to execute the logic to increase the rotational speed of the bale to the second calculated speed while the dispensing arm moves from the first position to a first catch position at the first calculated speed, and the controller is adapted or configured to decrease the rotational speed of the bale lower to a speed lower than the second calculated speed while the dispensing arm moves from the first catch position to the second position at a speed lower than the first calculated speed.

In another implementation, the baler further comprises an actuator configured to drive the dispensing arm.

In another implementation, the actuator may comprise an actuator brake.

In another implementation, the baler may be a round baler that produces cylindrical bales.

In another implementation, the binding material may be one or more of: twine, wire, netting, and/or plastic.

In another implementation, a baler may comprise a dispensing arm with a mounting end movably mounted to a frame of the baler and a dispensing end opposite the mounting end. The dispensing end may be configured to dispense twine to wrap a bale of crops. The bale may have a first end, a second end opposite the first end, a center between the first end and the second end, and a rotation axis extending along a longitudinal axis of the bale. The baler may comprise an actuator having a movable rod coupled to the mounting end of the dispensing arm and configured to move the dispensing arm between a stowed position, a first position near the first end of the bale, and a second position near the second end of the bale. The baler may comprise a gear train having an input coupled to the rod and an output coupled to the mounting end of the dispensing arm. The gear train may be configured to convert linear motion of the actuator to rotational movement of the dispensing arm. The baler may comprise a controller operatively coupled with the actuator and adapted or configured to; command the actuator to move the dispensing arm to the first position; command the actuator to move the dispensing arm to a first catch position near the center of the bale with a fast stroke and wrap twine onto the bale between the first end and the first catch position, resulting in the twine having a wide spacing on the bale; command the actuator to move the dispensing arm to the second end with an apply stroke and wrap twine onto the bale between the first catch position and the second end, resulting in the twine having a narrow spacing on the bale; wrap twine onto the second end with the dispensing arm in the second position; command the actuator to move the dispensing arm to a second catch position near the center of the bale with another fast stroke and wrap twine onto the bale between the second end and the second catch position, resulting in the twine having the wide spacing on the bale; command the actuator to move the dispensing arm to the first end with another apply stroke and wrap twine onto the bale between the second catch position and the first end, resulting in the twine having the narrow spacing on the bale, and wrap twine onto the first end with the dispensing arm in the first position.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in con-

## BRIEF DESCRIPTION OF THE DRAWINGS

FIGURE 1 is an exemplary baler having the twine application system being towed by a tractor.

FIGURE 2 is a schematic illustration of the twine application system where the twine arm is in the stowed position.

FIGURE 3 is a schematic illustration of the twine application system where the twine arm is in the first position.

FIGURE 4 is a schematic illustration of the twine application system where the twine arm is in the catch position.

FIGURE 5 is a schematic illustration of the twine application system where the twine arm is in the second position.

FIGURE 6A illustrates the application of twine on an exemplary bale at a stage after the first fast stroke.

FIGURE 6B illustrates the application of twine on the exemplary bale at a stage after the first apply stroke.

FIGURE 6C illustrates the application of twine on the exemplary bale at a stage after the second fast stroke.

FIGURE 6D illustrates the application of twine on the exemplary bale at a stage after the second apply stroke.

FIGURE 7 is a block diagram showing the twine application process by controlling the speed and position of the twine arm.

FIGURE 8 is a block diagram showing the twine application process by controlling the rotation speed of the bale within in the baler.

## DETAILED DESCRIPTION

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

The methods and systems disclosed herein, for example, relate to a system and methods for applying binding material around a bale, particularly a round bale in a round baler. The system and methods may be applicable to other machines, for instance rectangular agricultural balers or balers in an industrial setting. As will be described in further detail below, the systems and methods address issues with current balers that can cause inconsistent spacing of the binding material. Particularly, the system can apply consistently spaced binding material in balers that include actuators having an actuator brake.

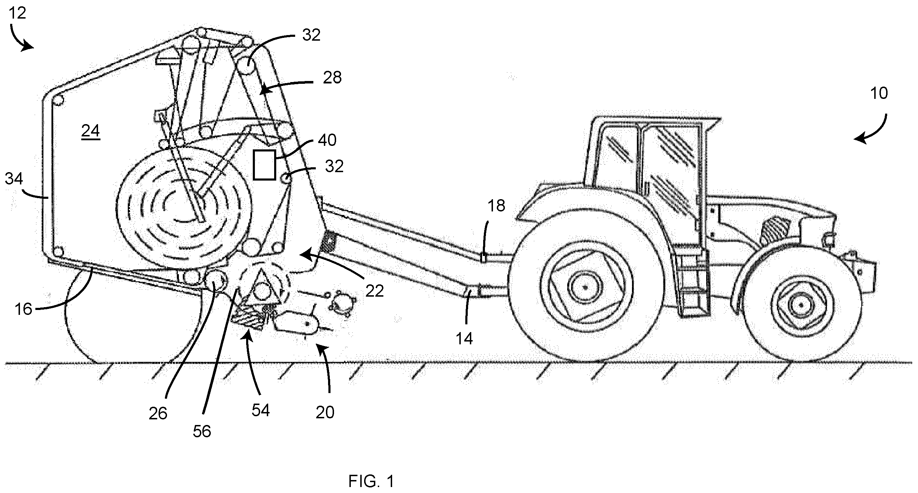

Turning to FIGURE 1, a tractor 10 used to tow a baler 12, in accordance with the present disclosure. Alternative vehicles, like combines or other agricultural vehicles could be used to tow the baler 12. The baler 12 may be a round baler configured to form round bales. The baler 12 may cooperate with the tractor 10 via a Three Point Linkage (TPL) 14. The baler 12 may be pulled, lifted and lowered by the TPL 14. Alternatively, the tractor 10 may draw the baler 12 with a drawbar. The baler 12 is mounted on a support frame 16 of a chassis. The tractor 10 may have a power take-off (PTO) that provides power to at least some of the mechanisms of the baler 12.

The baler 12 includes a pick-up unit 20 provided at the front end of the baler 12 to collect a crop material, such as hay, silage, or forage from the ground. The baler 12 includes a collection chamber 22 and a baling chamber 24. The crop material collected by the pick-up unit 20 is conveyed to the collection chamber 22. The crop material is fed into the baling chamber 24 from the collection chamber 22. During operation, the baler 12 has operational phases, namely, a bale formation phase, a bale binding phase, and a bale ejection phase. The baler 12 is fed with crop material in the bale formation phase, during which a bale is formed within the baling chamber 24. After the bale is formed, the bale binding phase is initiated, wherein the bale is tied by a binding material, such as, twine, wire, netting, or plastic. Upon completion of the bale binding phase, the bale is ejected from a rear end of the baler 12, onto the ground.

The baler 12 may be a variable chamber baler. The baler drive arrangement 28 includes a belt 30 and a plurality of drive rollers 32 for operating various components of the baler 12. The crop material is fed into the baling chamber 24 into space created by the belt 30. The space created by the belt 30 can be altered to produce bales of different sizes. Although the present disclosure will henceforth be explained with reference to the baler 12 as being a variable chamber baler, a person skilled in the art will appreciate that the baler 12 may alternatively be configured as a fixed chamber baler. In a fixed chamber baler, the baling chamber 24 may include a plurality of press rolls 26 provided along the inner periphery of the baling chamber 24. Each of the press rolls 26 is configured to rotate about a respective axis. The rotation of the press rolls 26 helps in agitating the crop material for efficient formation of the bales and brings together the crop material, thereby enabling formation of bales. The press rolls 26 are rotated about their respective axis by a drive torque, which may be provided by a Power Take Off (PTO) 18 via a baler drive arrangement 28. The baling chamber 24 includes a crop inlet and a bale outlet. The crop inlet is upstream of the pick-up unit 20. The bale outlet is at the rear end of the baler 12. The bale outlet of the baling chamber 24 is formed by a tailgate 34 provided at the rear end of the baling chamber 24. The tailgate 34 is opened to eject the bale from the baling chamber 24, in the bale ejection phase.

A binding unit 40, having a dispensing arm 42 and a binding material roll 44, may be disposed proximate the front end of the baling chamber 24. The binding material roll 44 is operable to dispense binding material 46. For the purposes of this application, the binding material 46 will be referred to as twine 46, but it will be appreciated that other types of binding material can be used. Similarly, the binding material roll 44 will be referred to as a twine roll 44, but the binding material roll 44 may be a roll of other suitable binding material. The dispensing arm 42 dispenses the twine 46 from the twine roll 44 into the baling chamber 24 for binding a bale 48 formed in the baling chamber 24. The twine 46 is inserted into the baling chamber 24, proximate to the press rolls 26, such that, as the press rolls 26 rotate the bale, the twine 46 tightly binds around the bale 48 formed in the baling chamber 24.

Again, referring to FIGS. 1, the collection chamber 22 is disposed between the pick-up unit 20 and the baling chamber 24. The pick-up unit 20, the collection chamber 22, and the baling chamber 24 are each coupled with a support frame 50. The collection chamber 22 is defined by four sides. At least one side is defined by a conveyor belt 52. For instance, the bottom wall is formed by the conveyor belt 52. The conveyor belt 52 is an endless belt, running along the length of the collection chamber 22, from the front end to the rear end of the collection chamber 22. The conveyor belt 52 conveys the crop material from the pick-up unit 20 towards the baling chamber 24.

The collection chamber 22 includes a feeder unit 54. The feeder unit 54 includes a rotor 56 with a plurality of fingers extending from an operative top side of the collection chamber 22. The plurality of fingers is configured to push the crop material towards the baling chamber 24. Alternatively, the feeder unit may include a conveyor belt, which facilitates moving the crop material from the collection chamber 22 to the baling chamber 24.

When the crop material is fed into the baling chamber 24, the belt 30 begins to bring together the crop material, thereby forming a bale 48. This is part of the bale formation phase. When the bale 48 of a required size is formed in the baling chamber 24, the bale is tied by the twine 46 dispensed by the twine roll 44. This is part of the bale binding cycle. After the completion of the bale binding cycle, the bale ejection cycle is initiated, wherein the tailgate 34 is opening and the bale tied by the twine 46 is pushed out of the baling chamber 24 onto the ground.

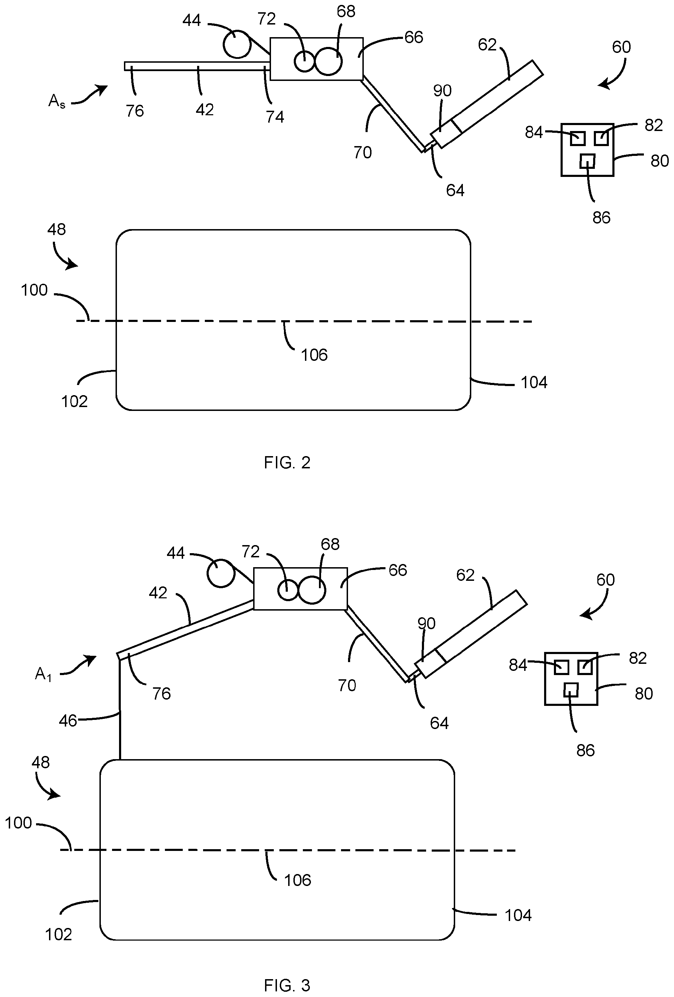

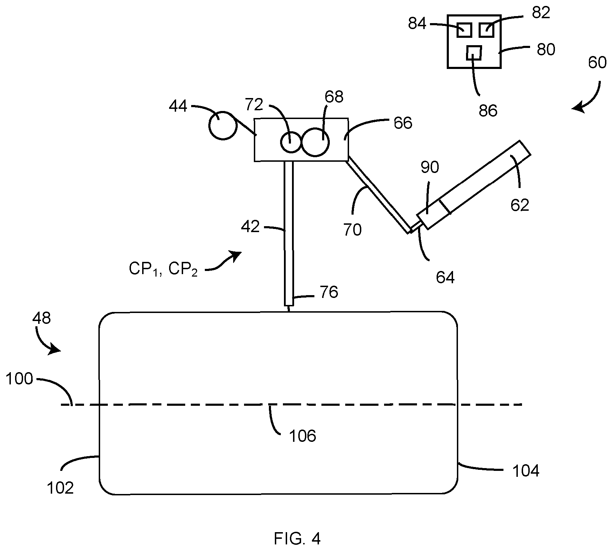

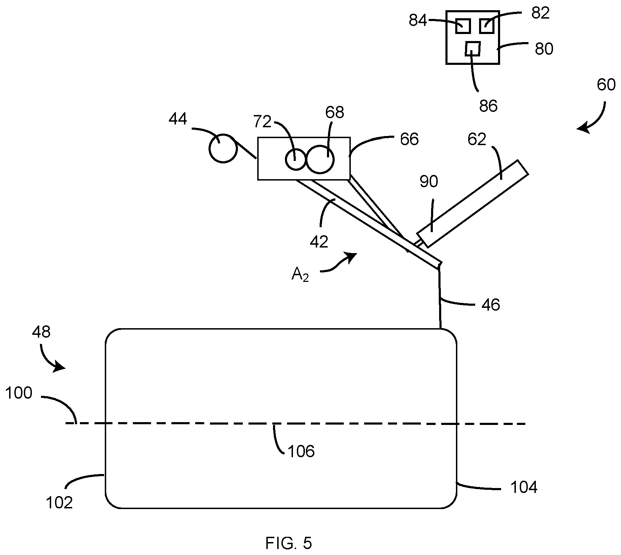

Turning to FIGURES 2-5, the binding unit 40 may further comprise a control system 60 configured to control the movement of dispensing arm 42. The control system 60 includes an actuator 62 having a rod 64 that extends in and out of the actuator 62. For instance, the actuator 62 may be a hydraulic cylinder, a pneumatic cylinder, or an electomechanical linear actuator. The control system 60 may also include a motion conversion device 66 configured to convert the linear motion of the actuator 62 to rotational motion that moves the dispensing arm 42. For instance, as illustrated, the motion conversion device 66 may be a gear train having an input 68 that is coupled to the end of the rod 64 with a linkage 70. The gear train 66 may have an output 72 that is coupled to a mounting end 74 of the dispensing arm 42. The mounting end 74 of the dispensing arm 42 is opposite the dispensing end 76, where the twine 46 is dispensed to the bale 48. The motion conversion device 66 may be exposed to the baling chamber 24 of the baler 12. Alternatively, the motion conversion device 66 may be contained within a housing. If the motion conversion device 66 is a gear train, the motion conversion device 66 may include a number of gears. It will be appreciated that the number of gears and size of the gears in the gear train can be selected through sound engineering judgement to meet the design needs of the binding unit 40. For instance, the number and size of gears can be selected to produce the force required to rotate the dispensing arm 42 in an arch motion at a desired speed. Alternatively, the motion conversion device 66 may be a rocker-style linkage or a four-bar linkage. The actuator 62 can be coupled to an input of the rocker-style linkage or a four-bar linkage, and the mounting end 74 of the dispensing arm 42 can be coupled to an output of the rocker-style linkage or a four-bar linkage. The linear motion of the actuator 62 can be converted to the rotational motion of the arm by the pivoting action of the rocker-style linkage or a four-bar linkage.

The control system 60 may further include a controller 80 or electronic control unit (ECU). The controller 80 includes a processor 82 and memory 84. The processor 82 performs the computation and control functions of the controller 80 and may comprise any type of processor or multiple processors, single integrated circuits such as a microprocessor, or any suitable number of integrated circuit devices and/or circuit boards working in cooperation to accomplish the functions of a processing unit. During operation, the processor 82 executes one or more programs, which may be contained within the memory 84 and, as such, controls the general operation of the controller 80 and the computer system of the controller 80 in executing the functions described herein. In the depicted embodiment, the memory 84 stores the program described below. It will be appreciated that the controller 80 can be the controller or computer system of the vehicle towing the baler. Alternatively, the controller 80 can be separate from the vehicle controller and adapted or configured to specifically control the baler 12. The distinct controller can be located on the vehicle 10 or on the baler 12. The controller 80 can be configured to communicate with and control other sensors on within the baler 12, including temperature, humidity, optical, weight, or any other suitable sensors.

The actuator 62 may include a brake 90 to maintain or lock the position of the rod 64 when the actuator 62 is not being used. To disengage the brake 90, the controller 80 can supply power to the actuator brake 90 over a minimum power threshold, thereby allowing smooth and free movement of the actuator 62 and the dispensing arm 42. In conventional single arm balers, in some instances or stages of the bale binding phase, the brake 90 may cause the binding unit to apply binding material inconsistently. As an example, for certain portions of the bale 48 along a longitudinal axis 100 of the bale 48, the tension force from the twine and rotation of the bale may pull the dispensing arm or assist the motion of the dispensing arm. This assistive force increases the speed of the dispensing arm 42 over the speed required for the user-selected twine spacing. The force acting on the arm from the twine 46 may decrease the force required from the actuator 62, resulting in less power being supplied to the actuator 62. Since the controller 80 is supplying less power to the actuator 62, the minimum power threshold may not be met and the brake 90 may engage. To correct this, the controller 80 may increase the power supplied to the actuator 62 to disengage the brake 90 and allow movement of the dispensing arm 42. This process may repeat and the brake may repetitively engage and disengage resulting in a jerking or jumping motion of the dispensing arm 42. This jerking and jumping motion of the dispensing arm 42 produces inconsistent spacing of the twine 46 being wrapped around the bale 48. For another potion of the bale along the longitudinal axis of the bale, the tension force acting on the dispensing arm 42 from the twine 46 may resist the motion of the dispensing arm 42. In this portion of the bale 48, the controller supplies enough power to exceed the minimum power threshold of the actuator brake 90 and move the dispensing arm 42 to dispense the binding material. Accordingly, during the bale binding phase, the dispensing arm 42 may move through an assistive portion $B_A$ of the bale 48 where the force from the twine 46 assists motion of the dispensing arm 42 and a resistive portion $B_R$ of the bale 48 where the force from the twine 46 resists the motion of the dispensing arm 42. A transition point $B_{TP}$ exists at the junction between the assistive portion $B_A$ of the bale 48 and the resistive portion $B_R$ of the bale 48.

To dispense the twine 46, the controller 80 is programmed to move the dispensing arm 42 from a stowed position $A_S$ to a first position $A_1$ aligned with a first end 102 of the bale 48 and then between the first position $A_1$ and a second position $A_2$ aligned with a second end 104 of the bale 48. In a first direction, the dispensing arm 42 may move from the first position $A_1$ through an $B_A$ of the bale 48 to the transition point $B_{TP}$, and then through a resistive portion $B_R$ of the bale 48 to the second position $A_2$. In a second direction opposite the first direction, the dispensing arm 42 may move from the second position $A_2$ through an assistive portion $B_A$ of the bale 48 to the transition point $B_{TP}$, and then through a resistive portion $B_R$ of the bale 48 to the first position $A_1$. As such, a portion of the bale 48 may be assistive in the first direction and resistive in the second direction. As described above, the dispensing arm 42 may dispense twine inconsistently in the assistive portions $B_A$ of the bale 48. As a result, the bale 48 could have inconsistently spaced twine along the length of the bale. If the twine is inconsistently spaced, crops may fall out of the finished bale 48 or the bale 48 could be misshapen and difficult to store or transport.

The controller 80 can be programmed to control the binding unit 40 such that it avoids the inconsistent spacing described above. For instance, the controller may use a Proportional Integral Derivative ("PID") algorithm to measure the dispensing arm speed and compare it against a calculated dispensing arm speed established by a kinematics model equation. The kinematics of the bale binding phase is determined by the following equation:

$$\vartheta_x = \frac{p * \omega_b}{2\pi}$$

This equation generally describes the relationship between the helically applied dispensing material, the movement of the arm, and the rotation of the bale. In the above equation $\vartheta_x$ is the speed of the dispensing end 76 of the dispensing arm 42 in a direction parallel to the longitudinal axis 100 of the bale 48, $p$ is the spacing between the helically applied dispensing materials, and $\omega_b$ is the rotational speed of the bale 48. Once a user has set $p$, the spacing of the binding material, the controller may be programmed to use the PID and change $\vartheta_x$ or $\omega_b$ to ensure the spacing of the binding material is consistent, as will be further described below.

In one implementation, the controller 80 may be programmed to control and adjust the actuator 62. As previously described, the actuator 62 is coupled to the dispensing arm 42 through the linkage 70 and gear train 66. Therefore, controlling the actuator 62 controls the speed of the dispensing arm 42 during the bale binding phase. In this implementation, the rotational speed of the bale may be constant throughout the bale binding phase. In this control strategy, the dispensing arm 42 will apply twine with a fast stroke through assistive portions $B_A$ of the bale 48 until it reaches a catch position of the dispensing arm 42 that is near the transition point $B_{TP}$ of the bale 48. Further, the dispensing arm 42 will apply twine with an application stroke through the resistive portions $B_R$ of the bale 48. The speed of the arm in the fast stroke is greater than the speed of the arm in the application stroke. For instance, the speed of the arm in the fast stroke can be selected so that the actuator 62 receives enough power to exceed the minimum power threshold of the actuator brake to prevent inadvertent engagement of the brake.

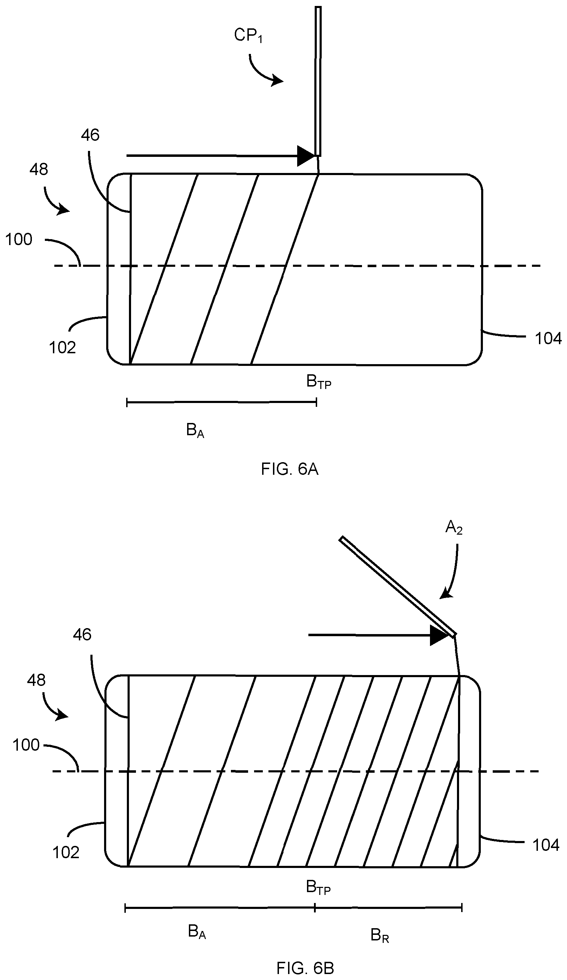

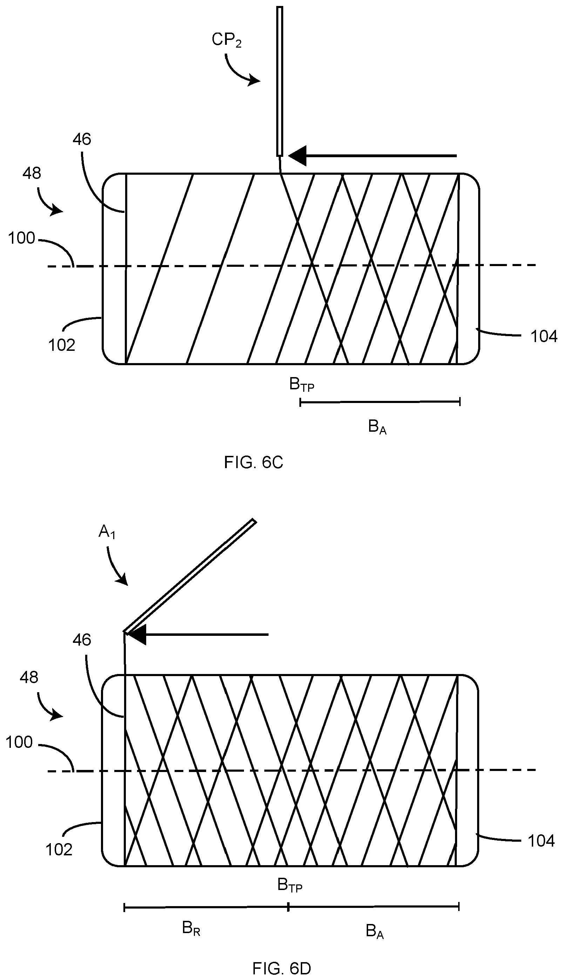

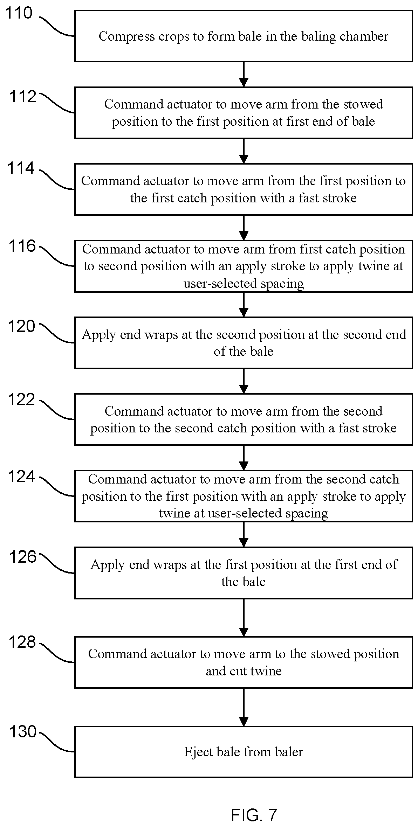

Using this control strategy, as illustrated in FIGURE 7, the controller 80 commands the actuator 62 and the dispensing arm 42 in the following manner. At 110, the baler compresses crops to form an unwrapped bale. At 112, the controller 80 commands the actuator 62 to move the dispensing arm 42 from its stowed position $A_S$ to the first position $A_1$ at the first end 102 of the bale 48. At 114, the controller 80 commands the actuator 62 to make a fast stroke to move the dispensing arm 42 to a first catch position $CP_1$ which is proximate the transition point $B_{TP}$ of the bale 48. The dispensing arm 42 may stay in the catch position $CP_1$ for a programmable period of time before moving again. Next at 116, the controller 80 commands the actuator 62 to make an application stroke from the catch position $CP_1$ to the second position $A_2$ at the second end 104 of the bale 48, where, at 120, the dispensing arm 42 will apply end wrap twine to the second end 104 of the bale 48. After applying end wraps to the second end 104, at 122, the controller 80 commands the actuator 62 to make a fast stroke to move the dispensing arm 42 from the second position $A_2$ to a second catch position $CP_2$ which is proximate the transition point $B_{TP}$ of the bale 48. It will be appreciated the first catch position $CP_1$ and the second catch position $CP_2$ may be the same position on the bale, for instance the midpoint 106 of the longitudinal axis 100 of the bale. Alternatively, the catch position may be offset from the midpoint 106 of the longitudinal axis 100 of the bale depending on where the assistive portion $B_A$ of the bale 48 transitions to the resistive portion $B_R$ of the bale 48. Once at the second catch position $CP_2$, at 124, the controller 80 may command the actuator 62 to make an application stroke to move the dispensing arm 42 from the second catch position $CP_2$ to the first position $A_1$ near the first end 102 of the bale 48. At 126, end wraps can be applied to the first end 102 of the bale 48. At 128, the controller 80 can command the actuator 62 to return the dispensing arm 42 to the stowed position $A_S$ and cut the twine 46. It will be appreciated that because the dispensing arm 42 moves faster during a fast stroke than an application stroke, the spacing of the twine 46 applied in an application stroke movement will be narrower than the spacing of the twine applied during a fast stroke movement as shown in FIGURE 6B. Further, because the first catch position $CP_1$ and the second catch position $CP_2$ may be offset from the midpoint 106 of the bale 48, there may be an overlap of portions of the bale receiving an application stroke and therefore there may be a portion of the bale has an overlap of narrowly spaced twine 46. At 130, once the bale binding phase has completed, the bale 48 can be ejected from the baler 12.

Additional steps can be added to this control strategy. For instance, the control strategy may be altered depending on the crop being baled. As an example, the control strategy may include a dry straw step. Dry straw may not stick together sufficiently during baling because draw straw tends to be short and slick. In a dry straw step, the controller 80 commands the actuator 62 to make a fast stroke to move the dispensing arm 42 along the entire length of the bale before moving dispensing arm 42 to the first catch position $CP_1$ and then through the rest of the process described above. This preliminary pass of the dispensing arm 42 may help the dry straw bale retain crops through the bale binding phase. A cinch step may also be added to the control strategy. In a cinch step, the controller 80 may command dispensing arm 42 to stop at a position between the second catch position $CP_2$ and the first position $A_1$ at a predetermined distance from the first end 102 of the bale 48 prior to applying end wraps. A single wrap of twine may be wrapped around the bale 48 at this position. After this cinch wrap is completed, the controller 80 may command the dispensing arm 42 to continue to move to the first position $A_1$ and apply end wraps at the first end 102. The twine applied in the cinch step assists keeping the twine tight prior to the end wraps and prevents the end wraps from loosening and falling off an end of the bale 48. A user of the tractor can add these additional steps to the control strategy through a user interface of the controller in addition to selecting the spacing of the twine 46.

In another implementation, the controller 80 may be programmed to control and adjust the actuator 62 to move the dispensing arm 42 and the PTO speed control 86 to change rotational speed of the bale. In this control strategy, the controller 80 may maintain a consistent ratio between the speed of the dispensing arm 42 and rotational speed of the bale 48 according the kinematics equation described above to provide the user-selected spacing. When the rotational speed of the bale 48 is increased, the speed of the movement of the dispensing arm 42 must increase to maintain consistent spacing of the binding material. To increase the speed of the movement of the dispensing arm 42, more power must be provided to the actuator 62. It will be appreciated that the controller can calculate the speed of the dispensing arm 42 such that power provided to the actuator 62 exceeds the minimum power threshold of the actuator brake 90 to prevent inadvertent engagement of the brake 90. In this control strategy, the rotational speed of the bale 48 may be increased when the dispensing arm 42 is moving through the assistive portion $B_A$ of the bale 48. The rotational speed of the bale 48 can be decreased when the dispensing arm 42 is moving through the resistive portion $B_R$ of the bale 48. Alternatively, the increased rotational speed may be used for both the resistive portion $B_R$ and assistive portion $B_A$ of the bale 48, or the entire length of the bale 48.

In this control strategy, the user can select the twine spacing, and the controller may command the actuator 62 to move the dispensing arm 42 at a speed where the minimum power threshold of the actuator brake 90 is exceeded. The controller 80 can calculate the rotational speed of the bale 48 required to maintain the ratio of the arm speed to the rotational speed of the bale and command the PTO speed control 86 to rotate the bale at this calculated speed. As the bale binding phase is completed, the measured values of the actuator 62, dispensing arm speed, and the rotational speed of the bale, can be compared against the calculated values in the controller and PID, and the controller 80 can adjust the baling unit for any errors to maintain consistent spacing of the twine 46.

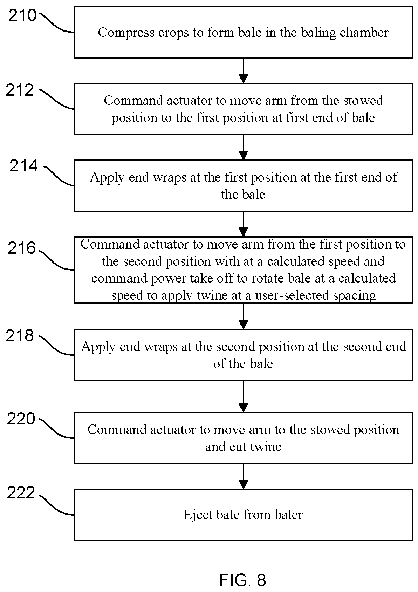

Referring to FIGURE 8, the movement of the arm and bale using this control strategy is described. A user may select the spacing of the twine 46. At 210, the baler compresses crops to form an unwrapped bale. At 212, the controller 80 may command the actuator 62 to move the dispensing arm 42 from the stowed position $A_S$ to the first position $A_1$ near the first end 102 of the bale 48. At 214, the binding unit 40 may dispense end wraps at the first end 102 of the bale 48. At 216, the controller 80 may command the actuator 62 to move the dispensing arm 42 from the first position $A_1$ to the first catch position $CP_1$ at an increased speed sufficient for the minimum power threshold of the actuator brake 90 to be exceeded. Simultaneously, the controller 80 may command the PTO speed control 86 to increase the rotational speed of the bale 48 to maintain consistent spacing of the twine. The controller 80 may command the actuator 62 and PTO speed control 86 to maintain the increased speed of the dispensing arm 42 and increased rotational speed of the bale 48 from the first catch position $CP_1$ to the second position $A_2$ near the second end 104 of the bale 48. Alternatively, the controller 80 may command the actuator 62 and PTO speed control 86 to decrease the speed of the dispensing arm 42 and the rotational speed of the bale 48 from the first catch point $CP_1$ to the second position $A_2$. At 218, once the dispensing arm 42 is at the second position $A_2$, the binding unit 40 can apply end wraps at the second end 104 of the bale 48. At 220, the arm can be returned to the stowed position $A_S$ and the twine 46 can be cut to end the bale binding phase. At 222, once the bale binding phase has completed, the bale 48 can be ejected from the baler 12.

While various spatial and directional terms, including but not limited to top, bottom, lower, mid, lateral, horizontal, vertical, front and the like are used to describe the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

The word "exemplary" is used herein to mean serving as an example, instance or illustration. Any aspect or design described herein as "exemplary" is not necessarily to be construed as advantageous over other aspects or designs. Rather, use of the word exemplary is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Further, at least one of A and B and/or the like generally means A or B or both A and B. In addition, the articles "a" and "an" as used in this application and the appended claims may generally be construed to mean "one or more" unless specified otherwise or clear from context to be directed to a singular form.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims. Of course, those skilled in the art will recognize many modifications may be made to this configuration without departing from the scope or spirit of the claimed subject matter.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

Various operations of implementations are provided herein. In one implementation, one or more of the operations described may constitute computer readable instructions stored on one or more computer readable media, which if executed by a computing device, will cause the computing device to perform the operations described. The order in which some or all of the operations are described should not be construed as to imply that these operations are necessarily order dependent. Alternative ordering will be appreciated by one skilled in the art having the benefit of this description. Further, it will be understood that not all operations are necessarily present in each implementation provided herein.

Any range or value given herein can be extended or altered without losing the effect sought, as will be apparent to the skilled person.

Also, although the disclosure has been shown and described with respect to one or more implementations, equivalent alterations and modifications will occur to others skilled in the art based upon a reading and understanding of this specification and the annexed drawings. The disclosure includes all such modifications and alterations and is limited only by the scope of the following claims. In particular regard to the various functions performed by the above described components (e.g., elements, resources, etc.), the terms used to describe such components are intended to correspond, unless otherwise indicated, to any component which performs the specified function of the described component (e.g., that is functionally equivalent), even though not structurally equivalent to the disclosed structure which performs the function in the herein illustrated exemplary implementations of the disclosure.

As used in this application, the terms "component," "module," "system," "interface," and the like are generally intended to refer to a computer-related entity, either hardware, a combination of hardware and software, software, or software in execution. For example, a component may be, but is not limited to being, a process running on a processor, a processor, an object, an executable, a thread of execution, a program and/or a computer. By way of illustration, both an application running on a controller and the controller can be a component. One or more components may reside within a process and/or thread of execution and a component may be localized on one computer and/or distributed between two or more computers.

Furthermore, the claimed subject matter may be implemented as a method, apparatus or article of manufacture using standard programming and/or engineering techniques to produce software, firmware, hardware or any combination thereof to control a computer to implement the disclosed subject matter. The term "article of manufacture" as used herein is intended to encompass a computer program accessible from any computer-readable device, carrier or media. Of course, those skilled in the art will recognize many modifications may be made to this configuration without departing from the scope or spirit of the claimed subject matter.

In addition, while a particular feature of the disclosure may have been disclosed with respect to only one of several implementations, such feature may be combined with one or more other features of the other implementations as may be desired and advantageous for any given or particular application. Furthermore, to the extent that the terms "includes," "having," "has," "with," or variants thereof are used in either the detailed description or the claims, such terms are intended to be inclusive in a manner similar to the term "comprising."

The implementations have been described, hereinabove. It will be apparent to those skilled in the art that the above methods and apparatuses may incorporate changes and modifications without departing from the general scope of this implementation. It is intended to include all such modifications and alterations in so far as they come within the scope of the appended claims or the equivalents thereof.

## Claims

1. A baler comprising:

a dispensing arm 42 with a mounting end 74 movably mounted to a frame 16 of the baler 12 and a dispensing end 76 opposite the mounting end, the dispensing end configured to dispense binding material 46 to wrap a bale 48 of crops having a first end 102 , a second end 104 opposite the first end, a center between the first end and the second end, and a rotation axis extending along a longitudinal axis 100 of the bale, wherein the dispensing arm 42 is moveable between a stowed position, a first position near the first end 102 of the bale, and a second position 104 near the second end of the bale; and

a controller 80 operatively connected with the dispensing arm 42, the controller 80 being adapted to control movement of the dispensing arm 42 to:

move to the first position,
move to a first catch position near the center of the bale 48 with a fast stroke and wrap the binding material 46 onto the bale between the first end 102 and the first catch position, resulting in the binding material 46 having a wide spacing on the bale,
move to the second end 104 with an apply stroke and wrap the binding material 46 onto the bale 48 between the first catch position and the second end 104, resulting in the binding material 46 having a narrow spacing on the bale,
wrap the binding material 46 onto the second end 104 with the dispensing arm 42 in the second position,
move to a second catch position near the center of the bale 48 with another fast stroke and wrap the binding material 46 onto the bale 48 between the second end 104 and the second catch position, resulting in the binding material 46 having the wide spacing,
move to the first end 102 with another apply stroke and wrap the binding material 46 onto the bale 48 between the second catch position and the first end 102, resulting in the binding material 46 having the narrow spacing on the bale 48, and
wrap the binding material 46 onto the first end with the dispensing arm 42 in the first position.

2. The baler of claim 1, wherein the controller 80 is operable to move the dispensing arm 42 faster during a fast stroke than during a during an apply stroke.

3. The baler of claim 1 or 2, wherein the first catch position and the second catch position are at the same position along the longitudinal axis 100 of the bale 48.

4. The baler according to at least one of the preceding claims, further comprising an actuator 62 configured to cause movement of the dispensing arm 42.

5. The baler according to at least one of the preceding claims, wherein the actuator 62 comprises an actuator brake 90.

6. The baler according to at least one of the preceding claims, further comprising a motion conversion device 66 having an input 68 configured to couple to the actuator 62 and an output 72 configured to couple to the mounting end 74 of the dispensing arm 42 and rotatably mount the dispensing arm 42 to the frame 16 of the baler 12.

7. The baler according to at least one of the preceding claims, wherein the motion conversion device 66 is one of a gear train, a rocker-style linkage, or a four-bar linkage.

8. The baler according to at least one of the preceding claims, further comprising a linkage 70 with a first end configured to couple to the actuator 62 and a second end configured to couple to the input 68 of the motion conversion device 66.

9. The baler according to at least one of the preceding claims, wherein the controller 80 is further adapted to move the dispensing arm 42 from the first position to the second position with a fast stroke before moving the dispensing arm 42 to the first catch position.

10. The baler according to at least one of the preceding claims, wherein the controller 80 is further adapted to:

determine a first calculated speed, the first calculated speed being a speed of the dispensing arm 42,
determine a second calculated speed, the second calculated speed being a rotational speed of the bale 48.

11. The baler according to at least one of the preceding claims, wherein the controller 80 is further adapted to execute control logic to compare a measured value of the rotational speed of the bale 48 to the second calculated speed and to compare a measured valve of the speed of the dispensing arm 42 to the first calculated speed, and the controller 80 adjusts the rotational speed of the bale 48 or the speed of the dispensing arm 42 to correct for deviations between the measured values and the calculated values.

12. The baler according to at least one of the preceding claims, wherein the controller 80 is further adapted to control the rotational speed of the bale 48 by commanding a power take-off speed control to increase or decrease a rotational speed of the bale.

13. The baler according to at least one of the preceding claims, wherein the controller 80 is adapted to increase the rotational speed of the bale 48 to the second calculated speed while the dispensing arm 42 moves from the first position to a first catch position at the first calculated speed, and the controller 80 is adapted to decrease the rotational speed of the bale 48 lower to a speed lower than the second calculated speed while the dispensing arm 42 moves from the first catch position to the second position at a speed lower than the first calculated speed.

14. The baler according to at least one of the preceding claims, wherein the binding material 46 is one or more of: twine, wire, netting, and/or plastic.

15. The baler according to at least one of the preceding claims, wherein the baler 12 is a round baler that produces round bales.

FIG. 1

FIG. 2

FIG. 3

FIG. 4

FIG. 5

CP₁

46

48

100

102

$B_{TP}$

$B_A$

104

FIG. 6A

A₂

46

48

100

102

$B_{TP}$

$B_A$

$B_R$

104

FIG. 6B

CP₂

46

48

100

102

104

B_TP

B_A

FIG. 6C

A₁

46

48

100

102

104

B_TP

B_R

B_A

FIG. 6D

110 — Compress crops to form bale in the baling chamber

112 — Command actuator to move arm from the stowed position to the first position at first end of bale

114 — Command actuator to move arm from the first position to the first catch position with a fast stroke

116 — Command actuator to move arm from first catch position to second position with an apply stroke to apply twine at user-selected spacing

120 — Apply end wraps at the second position at the second end of the bale

122 — Command actuator to move arm from the second position to the second catch position with a fast stroke

124 — Command actuator to move arm from the second catch position to the first position with an apply stroke to apply twine at user-selected spacing

126 — Apply end wraps at the first position at the first end of the bale

128 — Command actuator to move arm to the stowed position and cut twine

130 — Eject bale from baler

FIG. 7

210 — Compress crops to form bale in the baling chamber

212 — Command actuator to move arm from the stowed position to the first position at first end of bale

214 — Apply end wraps at the first position at the first end of the bale

216 — Command actuator to move arm from the first position to the second position with at a calculated speed and command power take off to rotate bale at a calculated speed to apply twine at a user-selected spacing

218 — Apply end wraps at the second position at the second end of the bale

220 — Command actuator to move arm to the stowed position and cut twine

222 — Eject bale from baler

FIG. 8

Europäisches
Patentamt
European
Patent Office
Office européen
des brevets

# EUROPEAN SEARCH REPORT

**Application Number**

EP 25 18 0058

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/034984 A1 (OLANDER BRIAN J [US] ET AL) 14 February 2008 (2008-02-14) * paragraphs [0035] - [0042]; figures 1-6 * ----- | 1-15 | INV. A01F15/12 A01F15/14 |
| A | DE 697 11 751 T2 (FORD NEW HOLLAND NV [BE]) 6 February 2003 (2003-02-06) * abstract; figures 1-6 * ----- | 1-15 | |
| A | EP 1 308 080 A2 (DEERE & CO [US]) 7 May 2003 (2003-05-07) * the whole document * ----- | 1-15 | |
| A | EP 2 700 297 B1 (CNH IND BELGIUM NV [BE]) 31 January 2018 (2018-01-31) * paragraphs [0040] - [0042]; figures 1-6 * ----- | 1-15 | |

**TECHNICAL FIELDS SEARCHED (IPC)**

A01F

The present search report has been drawn up for all claims

| Place of search | Date of completion of the search | Examiner |
|---|---|---|
| Munich | 6 November 2025 | Giorgini, Gabriele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 0058

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2025

| Patent document cited in search report | Publication date | Patent family member(s) | | Publication date |
|---|---|---|---|---|
| US 2008034984 A1 | 14-02-2008 | NONE | | |
| DE 69711751 T2 | 06-02-2003 | DE | 69707050 T2 | 14-03-2002 |
| | | DE | 69709981 T2 | 13-03-2003 |
| | | DE | 69711751 T2 | 06-02-2003 |
| | | EP | 0807378 A1 | 19-11-1997 |
| | | EP | 0807379 A1 | 19-11-1997 |
| | | EP | 0807380 A1 | 19-11-1997 |
| | | GB | 2313089 A | 19-11-1997 |
| | | US | 5855109 A | 05-01-1999 |
| | | US | 5916116 A | 29-06-1999 |
| | | US | 6164050 A | 26-12-2000 |
| EP 1308080 A2 | 07-05-2003 | CA | 2410080 A1 | 30-04-2003 |
| | | DE | 10153517 A1 | 15-05-2003 |
| | | EP | 1308080 A2 | 07-05-2003 |
| | | US | 2003089560 A1 | 15-05-2003 |
| EP 2700297 B1 | 31-01-2018 | EP | 2700297 A2 | 26-02-2014 |
| | | US | 2014053510 A1 | 27-02-2014 |
| | | US | 2017273247 A1 | 28-09-2017 |

EPO FORM P0459

For more details about this annex : see Official Journal of the European Patent Office, No. 12/82